# EUROPEAN PATENT APPLICATION

(11) **EP 4 387 025 A1**
(43) Date of publication of application: **19.06.2024**
(21) Application number: 22871829.2
(22) Date of filing: 09.09.2022
(51) Int. Cl.: H02H 9/00, H02M 1/32

(54) **DISCHARGING METHOD OF BUS CAPACITOR AND RELATED DEVICE THEREOF**

(30) Priority: 26.09.2021 CN 202111129516
(71) Applicant: Huawei Digital Power Technologies Co., Ltd., Shenzhen, Guangdong 518043 (CN)
(72) Inventor: HOU, Wenbin, Shenzhen, Guangdong 518043 (CN); LI, Xiaoqiu, Shenzhen, Guangdong 518043 (CN); HU, Yanjun, Shenzhen, Guangdong 518043 (CN)
(74) Representative: Isarpatent
(86) International application number: PCT/CN2022/118060
(87) International publication number: WO 2023/045781

(57) **Abstract**

This application discloses a bus capacitor discharging method and a related device thereof. The discharging method is applicable to a DC/DC converter, and the DC/DC converter includes a chopper unit, a transformer, and a rectifier unit. A bus capacitor is coupled to the chopper unit, the chopper unit is coupled to a primary side of the transformer, a secondary side of the transformer is coupled to the rectifier unit, and the chopper unit and the rectifier unit are both coupled to a controller. During specific implementation, when determining to discharge the bus capacitor, the controller may control the rectifier unit to short-circuit the secondary side of the transformer, and control the chopper unit to close a loop formed between the bus capacitor and the primary side of the transformer. Implementing this application can reduce costs, and ensure high security.

## Description

This application claims priority to Chinese Patent Application No. 202111129516.2, filed with the China National Intellectual Property Administration on September 26, 2021 and entitled "BUS CAPACITOR DISCHARGING METHOD AND RELATED DEVICE THEREOF", which is incorporated herein by reference in its entirety.

### TECHNICAL FIELD

This application relates to the field of power supply technologies, and in particular, to a bus capacitor discharging method and a related device thereof.

### BACKGROUND

There is a large-capacity capacitor (namely, a bus capacitor) between a positive bus and a negative bus of an electric vehicle. When the vehicle ends use or is faulty, to ensure safety of a high voltage, a voltage on the bus capacitor needs to be quickly reduced to be below a safe voltage.

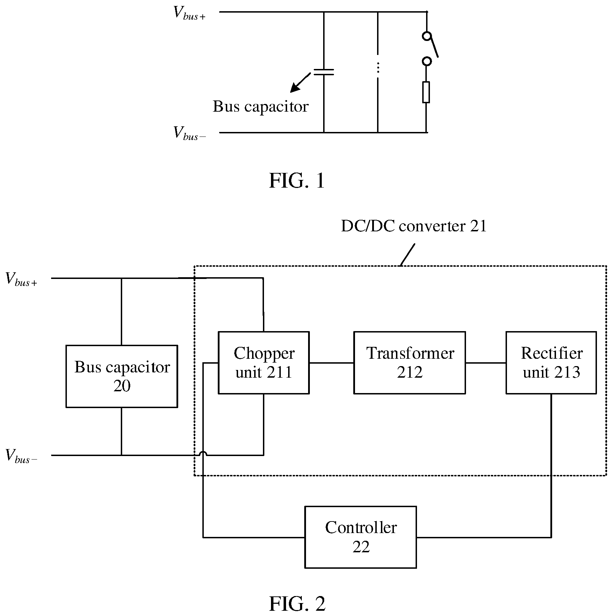

For a method used in a conventional technology, refer to FIG. 1. As shown in FIG. 1, in the conventional technology, a switch and a resistor are added between a positive bus and a negative bus. When active discharging of a bus capacitor needs to be performed, the switch is turned on, and energy on the bus capacitor may be consumed by the resistor. However, the conventional-technology method for implementing active discharging of the bus capacitor by adding the switch and the resistor is costly.

### SUMMARY

This application provides a bus capacitor discharging method and a related device thereof, so that costs can be reduced, and high security can be ensured.

According to a first aspect, an embodiment of this application provides a bus capacitor discharging method. The discharging method is applicable to a DC/DC converter, and the DC/DC converter includes a chopper unit, a transformer, and a rectifier unit. A bus capacitor is coupled to the chopper unit, the chopper unit is coupled to a primary side of the transformer, a secondary side of the transformer is coupled to the rectifier unit, and the chopper unit and the rectifier unit are both coupled to a controller. During specific implementation, when determining to discharge the bus capacitor, the controller may control the rectifier unit to short-circuit the secondary side of the transformer, and control the chopper unit to close a loop formed between the bus capacitor and the primary side of the transformer. In this embodiment of this application, the controller controls the rectifier unit to short-circuit the secondary side of the transformer, and controls the chopper unit to close the loop formed between the bus capacitor and the primary side of the transformer. In this case, the bus capacitor further passes through equivalent conductive impedance of a secondary-side loop of the transformer in addition to conductive impedance of the chopper unit and impedance of the primary side of the transformer, to form a closed discharge loop. In this embodiment of this application, a switch and a resistor do not need to be added for active discharging of the capacitor, so that costs are low. In addition, a state of the rectifier unit is controlled by the controller during bus capacitor discharging, so that an excessively high output voltage of the secondary side of the transformer caused by an unstable state of the rectifier unit can be avoided. In conclusion, by implementing this embodiment of this application, low costs and high security are ensured.

With reference to the first aspect, in a first possible implementation, when determining to stop discharging the bus capacitor, the controller may further control the rectifier unit to rectify a voltage on the secondary side of the transformer.

With reference to the first aspect, in a second possible implementation, when receiving an instruction for active discharging of the bus capacitor, the controller may determine to discharge the bus capacitor.

With reference to the first aspect, in a third possible implementation, when finding that a voltage at two ends of the bus capacitor is greater than a preset voltage threshold, the controller may determine to discharge the bus capacitor.

With reference to the first possible implementation of the first aspect, in a fourth possible implementation, when receiving an instruction for stopping discharging the bus capacitor, the controller determines to stop discharging the bus capacitor.

With reference to the first possible implementation of the first aspect, in a fifth possible implementation, when finding that a voltage at two ends of the bus capacitor is lower than a preset voltage threshold, the controller may determine to stop discharging the bus capacitor.

With reference to any one of the first aspect or the possible implementations of the first aspect, in a sixth possible implementation, the rectifier unit includes a first switch transistor and a second switch transistor. That a secondary side of the transformer is coupled to the rectifier unit may be specifically implemented as follows: One end of the secondary side of the transformer is coupled to a first end of the first switch transistor, the other end of the secondary side of the transformer is coupled to a first end of the second switch transistor, a second end of the first switch transistor is coupled to a second end of the second switch transistor, and a third end of the first switch transistor and a third end of the second switch transistor are both coupled to the controller. In this case, the controller may control both the first switch transistor and the second switch transistor to be turned on, so that the rectifier unit short-circuits the secondary side of the transformer.

With reference to the sixth possible implementation of the first aspect, in a seventh possible implementation, the secondary side of the transformer includes a first end, a second end, and a third end. That one end of the secondary side of the transformer is coupled to a first end of the first switch transistor, and the other end of the secondary side of the transformer is coupled to a first end of the second switch transistor may be specifically implemented as follows: The first end of the secondary side of the transformer is coupled to the first end of the first switch transistor, and the second end of the secondary side of the transformer is coupled to the first end of the second switch transistor; and the second end of the first switch transistor and the second end of the second switch transistor are coupled to one end of a load, and the other end of the load is coupled to the third end of the secondary side of the transformer.

With reference to the seventh possible implementation of the first aspect, in an eighth possible implementation, the load includes a battery, the DC/DC converter is disposed between the battery and a power battery, and the power battery is coupled to the bus capacitor and the chopper unit.

With reference to the eighth possible implementation of the first aspect, in a ninth possible implementation, the DC/DC converter further includes an isolation switch, the isolation switch is coupled to the controller, and the third end of the secondary side of the transformer is coupled to the battery through the isolation switch. When determining to discharge the bus capacitor, the controller controls the isolation switch to be turned off. By implementing this embodiment of this application, voltage backflow of the battery can be avoided, and security and reliability can be ensured.

With reference to the sixth possible implementation of the first aspect, in a tenth possible implementation, the rectifier unit further includes a third switch transistor and a fourth switch transistor. That a secondary side of the transformer is coupled to the rectifier unit may be specifically further implemented as follows: One end of the secondary side of the transformer is further coupled to a second end of the third switch transistor, the other end of the secondary side of the transformer is further coupled to a second end of the fourth switch transistor, a first end of the third switch transistor and a first end of the fourth switch transistor are coupled to one end of a load, and the other end of the load is coupled to the second end of the first switch transistor and the second end of the second switch transistor. In this case, the controller may control both the first switch transistor and the second switch transistor to be turned on, or control both the third switch transistor and the fourth switch transistor to be turned on, so that the rectifier unit short-circuits the secondary side of the transformer. This embodiment of this application provides another circuit diagram to which the bus capacitor discharging method is applicable, to improve applicability of this embodiment of this application.

With reference to the tenth possible implementation of the first aspect, in an eleventh possible implementation, the load includes a power factor correction circuit. The DC/DC converter is disposed between the power factor correction circuit and a power battery, the power battery is coupled to the bus capacitor and the chopper unit, the power factor correction circuit is coupled to the secondary side of the transformer through the rectifier unit, and the power factor correction circuit is in a non-working state when the secondary side of the transformer is short-circuited.

With reference to any one of the first aspect or the possible implementations of the first aspect, in a twelfth possible implementation, the controlling the chopper unit to close a loop formed between the bus capacitor and the primary side of the transformer may be specifically implemented as follows: The controller alternately sends a first control signal and a second control signal to the chopper unit according to a first preset frequency, where the chopper unit includes a first bridge arm and a second bridge arm that are connected in parallel, and each bridge arm includes two switch transistors connected in series. The first control signal may be used to: control a first switch transistor in the first bridge arm and a second switch transistor in the second bridge arm to be turned on, and control a second switch transistor in the first bridge arm and a first switch transistor in the second bridge arm to be turned off; and the second control signal is used to: control the first switch transistor in the first bridge arm and the second switch transistor in the second bridge arm to be turned off, and control the second switch transistor in the first bridge arm and the first switch transistor in the second bridge arm to be turned on.

With reference to the twelfth possible implementation of the first aspect, in a thirteenth possible implementation, when determining to stop discharging the bus capacitor, the controller may alternately send the first control signal and the second control signal to the chopper unit according to a second preset frequency.

With reference to the first aspect or the first possible implementation of the first aspect, in a fourteenth possible implementation, the DC/DC converter further includes a first switch and a first resistor, and two ends of the first switch and the first resistor that are connected in series are coupled between two ends of the transformer. The controller may further control the first switch to be turned on, so that the secondary side of the transformer is short-circuited. By implementing this embodiment of this application, a discharge speed of the bus capacitor is further improved.

According to a second aspect, an embodiment of this application provides a bus capacitor discharging device. The discharging device includes a transceiver, a controller, and a memory. The transceiver, the controller, and the memory are connected by using a bus system. The transceiver may receive and send instructions. The memory may store the instructions. The controller may invoke the instructions stored in the memory, to perform the method steps in any one of the first aspect or the possible implementations of the first aspect.

According to a third aspect, an embodiment of this application provides an electric vehicle. The electric vehicle includes the discharging device provided in the second aspect and a power battery. The discharging device may output a voltage to the power battery, or convert a voltage output by the power battery and then provide the converted voltage to a load in the electric vehicle.

It should be understood that implementation and beneficial effects of the foregoing aspects of this application may be referred to each other.

### BRIEF DESCRIPTION OF DRAWINGS

FIG. 1 is a partial structural block diagram of bus capacitor discharging in a conventional technology;
FIG. 2 is a structural block diagram of bus capacitor discharging according to an embodiment of this application;
FIG. 3 is a circuit diagram of bus capacitor discharging according to an embodiment of this application;
FIG. 4 is an equivalent circuit diagram of bus capacitor discharging according to an embodiment of this application;
FIG. 5 is another circuit diagram of bus capacitor discharging according to an embodiment of this application;
FIG. 6 is another structural block diagram of bus capacitor discharging according to an embodiment of this application; and
FIG. 7 is a schematic structural diagram of a bus capacitor discharging device according to an embodiment of this application.

### DESCRIPTION OF EMBODIMENTS

Technical solutions of this application are further described below in detail with reference to the accompanying drawings.

FIG. 2 is a structural block diagram of bus capacitor discharging according to an embodiment of this application. A bus capacitor discharging method provided in embodiments of this application is applicable to a DC/DC converter 21 shown in FIG. 2. The DC/DC converter 21 includes a chopper unit 211, a transformer 212, and a rectifier unit 213. A bus capacitor 20 is coupled to the chopper unit 211, the chopper unit 211 is coupled to a primary side of the transformer 212, a secondary side of the transformer 212 is coupled to the rectifier unit 213, and the chopper unit 211 and the rectifier unit 213 are both coupled to a controller 22.

It should be first noted that "coupling" described in this application indicates a direct or indirect connection. For example, that A is connected to B may not only be that A is directly connected to B, but also be that A is indirectly connected to B by using one or more other electrical components. For example, it may be that A is directly connected to C, and C is directly connected to B. In this way, A is connected to B by using C.

The chopper unit 211 may be, for example, a full-bridge circuit, a half-bridge circuit, a buck converter, a boost converter, or a buck-boost converter.

The rectifier unit 213 may be, for example, a half-bridge rectifier circuit or a full-bridge rectifier circuit. It may be understood that, a rectifier component in the rectifier unit is a controllable switch component, for example, a switch transistor, and the controller 22 may control an on/off state.

The controller 22 may be, for example, a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

The bus capacitor discharging method provided in embodiments of this application may be performed by the controller 22. During specific implementation, when determining to discharge the bus capacitor 20, the controller 22 controls the rectifier unit 213 to short-circuit the secondary side of the transformer 212, and controls the chopper unit 211 to close a loop formed between the bus capacitor 20 and the primary side of the transformer 212. It may be understood that the transformer 212 is not an ideal transformer and has a leakage inductance. When the secondary side of the transformer 212 is short-circuited, conductive impedance of the secondary side of the transformer 212 and conductive impedance of the rectifier unit 213 may be induced to the primary side of the transformer 212 through the secondary side of the transformer 212, that is, a primary-side loop of the transformer 212 has equivalent conductive impedance of a secondary-side loop of the transformer 212. Therefore, the bus capacitor 20 may form a closed discharge loop through conductive impedance of the chopper unit 211, conductive impedance of the primary side of the transformer 212, and the equivalent conductive impedance of the secondary-side loop of the transformer 212.

In some feasible implementations, the controller 22 may receive an external instruction. For example, if the DC/DC converter 21 is disposed in an electric vehicle, the controller 22 may receive an instruction delivered by an entire vehicle controller in the electric vehicle, for example, an instruction for active discharging of the bus capacitor 20. When receiving the instruction for active discharging of the bus capacitor 20, the controller 22 determines to discharge the bus capacitor 20, in other words, the controller 22 enters a bus capacitor active discharging mode.

Further, in some feasible implementations, when the controller 22 determines to stop discharging the bus capacitor 20, in other words, the controller 22 exits the bus capacitor active discharging mode, the controller 22 controls the rectifier unit 213 to rectify a voltage on the secondary side of the transformer 212. In other words, in this case, the rectifier unit 213 does not short-circuit the secondary side of the transformer 212. For example, when a voltage at two ends of the bus capacitor 20 is lower than a preset voltage threshold, the controller 22 determines to stop charging the bus capacitor 20. Optionally, the controller 22 may monitor the voltage at the two ends of the bus capacitor 20; and determine, when finding that the voltage at the two ends of the bus capacitor 20 is lower than the preset voltage threshold, to stop discharging the bus capacitor 20. Alternatively, the entire vehicle controller in the electric vehicle may monitor the voltage at the two ends of the bus capacitor 20, and deliver, to the controller 22 when finding that the voltage at the two ends of the bus capacitor 20 is lower than the preset voltage threshold, an instruction for stopping discharging the bus capacitor. When receiving the instruction for stopping discharging, the controller 22 determines to stop charging the bus capacitor 20.

In this embodiment of this application, the controller controls the rectifier unit to short-circuit the secondary side of the transformer, and controls the chopper unit to close the loop formed between the bus capacitor and the primary side of the transformer. In this case, the bus capacitor further passes through the equivalent conductive impedance of the secondary-side loop of the transformer in addition to the conductive impedance of the chopper unit and the impedance of the primary side of the transformer, to form the closed discharge loop. In this embodiment of this application, a switch and a resistor do not need to be added for active discharging of the capacitor, so that costs are low. In addition, a state of the rectifier unit is controlled by the controller during bus capacitor discharging, so that an excessively high output voltage of the secondary side of the transformer caused by an unstable state of the rectifier unit can be avoided. In conclusion, by implementing this embodiment of this application, low costs and high security are ensured.

The following describes active discharging of the bus capacitor with reference to a circuit diagram provided in embodiments of this application.

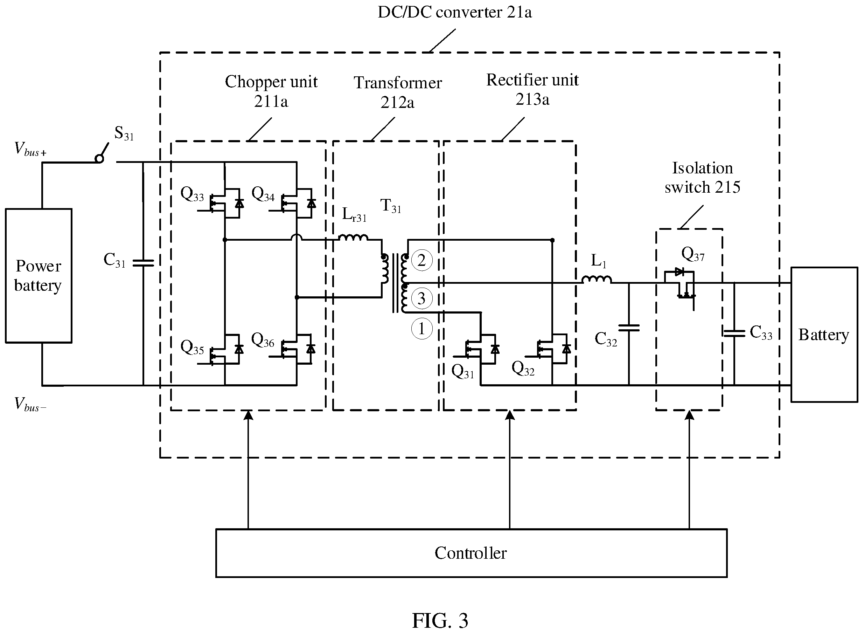

In some feasible implementations, FIG. 3 is a circuit diagram of bus capacitor discharging according to an embodiment of this application. As shown in FIG. 3, a DC/DC converter 21a includes a chopper unit 211a, a transformer 212a, and a rectifier unit 213a.

The rectifier unit 213a includes a first switch transistor *Q*₃₁ and a second switch transistor *Q*₃₂. In this application, an example in which each switch transistor is a metal-oxide-semiconductor field-effect transistor (Metal-Oxide-Semiconductor Field-Effect Transistor, MOSFET) is used for description. It should be understood that each switch transistor may alternatively be another semiconductor device, for example, an insulated gate bipolar transistor (Insulated Gate Bipolar Transistor, IGBT).

The transformer 212a includes a leakage inductance *L*_{*r*31} and an ideal transformer *T*₃₁. It should be noted that the leakage inductance *L*_{*r*31} and the ideal transformer *T*₃₁ are specifically embodied as one actual transformer. For example, a secondary side of the ideal transformer *T*₃₁ has three taps, to form a first end, a second end, and a third end of the transformer 212a.

The first end of the secondary side of the transformer 212a (namely, a first end ① of the secondary side of the ideal transformer *T*₃₁) is coupled to a first end (namely, a drain electrode) of the first switch transistor *Q*₃₁. The second end of the secondary side of the transformer 212a (namely, a second end ② of the secondary side of the ideal transformer *T*₃₁) is coupled to a first end (namely, a drain electrode) of the second switch transistor *Q*₃₂. A second end (namely, a source electrode) of the first switch transistor *Q*₃₁ and a second end (namely, a source electrode) of the second switch transistor *Q*₃₂ are coupled to one end of a load, and the other end of the load is coupled to the third end of the secondary side of the transformer 212a (namely, a third end ③ of the secondary side of the ideal transformer *T*₃₁). A third end (namely, a gate electrode) of the first switch transistor *Q*₃₁ and a third end (namely, a gate electrode) of the second switch transistor *Q*₃₂ are both coupled to different output ports in a controller.

During specific implementation, the controller may control both the first switch transistor *Q*₃₁ and the second switch transistor *Q*₃₂ to be turned on, so that the secondary side of the transformer 212a is short-circuited.

For example, the chopper unit 211a is a full-bridge circuit. The chopper unit 211a includes a first bridge arm and a second bridge arm that are connected in parallel, and each bridge arm includes two switch transistors connected in series. In other words, a first switch transistor (namely, a switch transistor *Q*₃₃ shown in FIG. 3) in the first bridge arm and a second switch transistor (namely, a switch transistor *Q*₃₅ shown in FIG. 3) in the first bridge arm are connected in series; and a first switch transistor (namely, a switch transistor *Q*₃₄ shown in FIG. 3) in the second bridge arm and a second switch transistor (namely, a switch transistor *Q*₃₆ shown in FIG. 3) in the second bridge arm are connected in series. During specific implementation, a second end (namely, a source electrode) of the switch transistor *Q*₃₃ and a first end (namely, a drain electrode) of the switch transistor *Q*₃₅ are coupled to one end of the transformer 212a, and a second end (namely, a source electrode) of the switch transistor *Q*₃₄ and a first end (namely, a drain electrode) of the switch transistor *Q*₃₆ are coupled to the other end of the transformer 212a. In addition, a first end (namely, a drain electrode) of the switch transistor *Q*₃₃ and a first end (namely, a drain electrode) of the switch transistor *Q*₃₄ are coupled to one end of a bus capacitor *C*₃₁, and a second end (namely, a source electrode) of the switch transistor *Q*₃₅ and a second end (namely, a source electrode) of the switch transistor *Q*₃₆ are coupled to the other end of the bus capacitor *C*₃₁. Gate electrodes of the switch transistors (such as the switch transistor *Q*₃₃, the switch transistor *Q*₃₄, the switch transistor *Q*₃₅, and the switch transistor *Q*₃₆) are all coupled to different output ports in the controller.

When determining to discharge the bus capacitor *C*₃₁, the controller may alternately send a first control signal and a second control signal to the chopper unit 211a according to a first preset frequency.

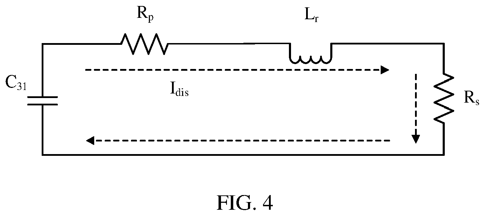

During specific implementation, the first control signal may be used to: control the switch transistor *Q*₃₃ and the switch transistor *Q*₃₆ to be turned on, and control the switch transistor *Q*₃₅ and the switch transistor *Q*₃₄ to be turned off. In this case, the bus capacitor *C*₃₁, the switch transistor *Q*₃₃, the leakage inductance *L*ᵣ₃₁, the ideal transformer *T*₃₁, and the switch transistor *Q*₃₆ form an equivalent circuit shown in FIG. 4. *I_{dis}* is a discharge current of the bus capacitor *C*₃₁ in the closed loop, *R_{P}* is a sum of conductive impedance of the switch transistor *Q*₃₃, conductive impedance of the switch transistor *Q*₃₆, and conductive impedance of a primary side of the ideal transformer *T*₃₁, and *R_{S}* is equivalent conductive impedance of a secondary-side loop of the ideal transformer *T*₃₁.

The second control signal may be used to: control the switch transistor *Q*₃₅ and the switch transistor *Q*₃₄ to be turned on, and control the switch transistor *Q*₃₃ and the switch transistor *Q*₃₆ to be turned off. In this case, the bus capacitor *C*₃₁, the switch transistor *Q*₃₄, the ideal transformer *T*₃₁, the leakage inductance *L*_{*r*31}*,* and the switch transistor *Q*₃₅ may also form an equivalent circuit shown in FIG. 4. *I_{dis}* is still a discharge current of the bus capacitor *C*₃₁ in the closed loop, *R_{P}* is a sum of conductive impedance of the switch transistor *Q*₃₅, conductive impedance of the switch transistor *Q*₃₄, and conductive impedance of a primary side of the ideal transformer *T*₃₁, and *R_{S}* is equivalent conductive impedance of a secondary-side loop of the ideal transformer *T*₃₁.

Optionally, when determining to stop discharging the bus capacitor *C*₃₁, the controller alternately sends the first control signal and the second control signal to the chopper unit 211a according to a second preset frequency. It may be understood that, when determining to stop discharging the bus capacitor *C*₃₁ and determining to discharge the bus capacitor *C*₃₁, the controller alternately sends the first control signal and the second control signal to the chopper unit 211a. In other words, all switch transistors on a same bridge arm in the chopper unit 211a are mutually conducted. A difference is that the controller sends the control signals to the chopper unit 211a at different frequencies. For example, a frequency at which the controller sends the control signal when determining to discharge the bus capacitor *C*₃₁ is the first preset frequency, and the first preset frequency is related to duration for discharging the bus capacitor *C*₃₁. For another example, a frequency at which the controller sends the control signal when determining to stop discharging the bus capacitor *C*₃₁ is the second preset frequency, and the second preset frequency is related to a magnitude of a direct current voltage at which the load works.

In some feasible implementations, the load connected to the DC/DC converter 21a shown in FIG. 3 is a battery. The DC/DC converter 21a is disposed between the battery and a power battery. The bus capacitor *C*₃₁ is disposed between the power battery and the DC/DC converter 21a. For example, the voltage converter 21a is used in a power supply system of an electric vehicle, and may convert an output voltage of the power battery into a charging voltage of the battery. When the bus capacitor *C*₃₁ is discharged, the bus capacitor discharging method provided in embodiments of this application may be performed.

Optionally, the power battery may be coupled to the DC/DC converter 21a by using a switch *S*₃₁. When the controller determines to discharge the bus capacitor *C*₃₁, the switch *S*₃₁ is turned off, so that the power battery does not continue to provide energy to the bus capacitor *C*₃₁. Optionally, the switch *S*₃₁ may be a semiconductor switch, for example, an MOSFET or an IGBT, and the controller controls the switch *S*₃₁ to be turned off. Alternatively, the switch *S*₃₁ may be a mechanical switch, and when the electric vehicle stops, a user presses a fire-extinguishing button to perform associated disconnection.

Further, in some feasible implementations, the DC/DC converter 21a further includes an isolation switch 215. The third end of the secondary side of the transformer 212a (namely, the third end ③ of the secondary side of the ideal transformer *T*₃₁) is coupled to the load (for example, the battery) by using the isolation switch 215. For example, the isolation switch 215 is a switch transistor *Q*₃₇. In this case, the third end ③ of the secondary side of the ideal transformer *T*₃₁ is a drain electrode coupled to the switch transistor *Q*₃₇, a source electrode of the switch transistor *Q*₃₇ is coupled to a positive electrode of the battery, and a gate electrode of the switch transistor *Q*₃₇ is coupled to the controller. A negative electrode of the battery is coupled to the second end (namely, the source electrode) of the first switch transistor *Q*₃₁ and the second end (namely, the source electrode) of the second switch transistor *Q*₃₂. During specific implementation, when determining to discharge the bus capacitor *C*₃₁, the controller may control the switch transistor *Q*₃₇ to be turned off, so that voltage backflow of the battery can be avoided, and security and reliability can be ensured.

Optionally, the third end ③ of the secondary side of the ideal transformer *T*₃₁ may be coupled to the drain electrode of the switch transistor *Q*₃₇ by using an inductor *L*₁, and a capacitor *C*₃₂ is connected in parallel between a coupling node of the inductor *L*₁ and the drain electrode of the switch transistor *Q*₃₇ and the negative electrode of the battery. The inductor *L*₁ and the capacitor *C*₃₂ form an LC filter, to filter out ripple interference of the output voltage of the rectifier unit 213a. Further, a filter capacitor *C*_{*3*3} may be connected in parallel between a coupling node at which the source electrode of the switch transistor *Q*₃₇ is coupled to the battery and the negative electrode of the battery, and the filter capacitor *C*₃₃ may be disposed close to the battery.

In this embodiment of this application, the switch transistors included in the rectifier unit are controlled through addition, and the secondary side of the transformer is short-circuited, so that the equivalent conductive impedance of the secondary side of the transformer is added to the discharge loop of the bus capacitor. Compared with a state in which the secondary side of the transformer is not short-circuited, in this embodiment of this application, the equivalent conductive impedance of the secondary side of the transformer is added to consume energy on the bus capacitor, so that a discharge speed of the bus capacitor can be accelerated. In addition, the switch transistors in the rectifier unit are controlled, so that an excessively high output voltage of the secondary side of the transformer caused when the switch transistors in the rectifier unit are not controlled can be avoided. In addition, compared with a conventional-technology discharge manner in which a resistor and a switch are added, costs in this embodiment of this application are low. In conclusion, by implementing this embodiment of this application, a high discharge speed, low costs, and high security are ensured.

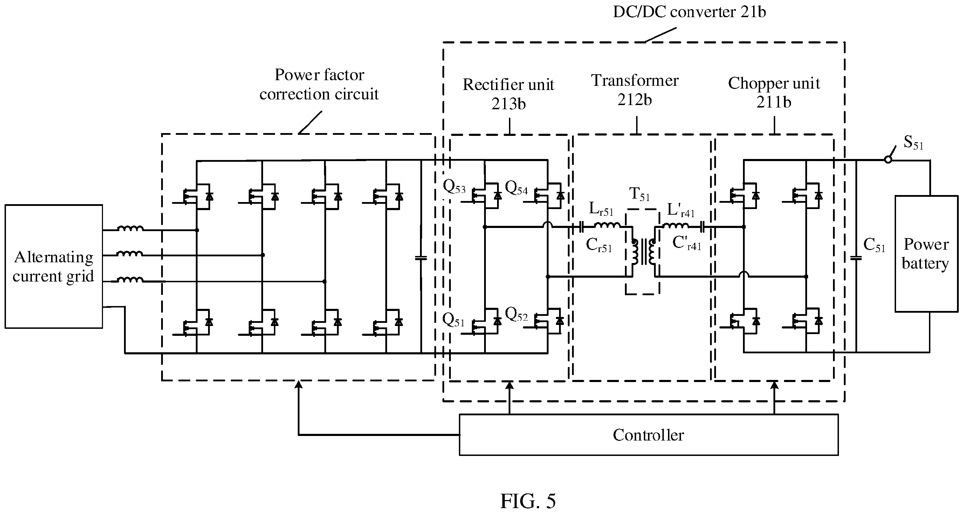

Optionally, in some feasible implementations, FIG. 5 is another circuit diagram of bus capacitor discharging according to an embodiment of this application. As shown in FIG. 5, a DC/DC converter 21b includes a chopper unit 211b, a transformer 212b, and a rectifier unit 213b.

In addition to including a first switch transistor (for example, a switch transistor *Q*₅₁) and a second switch transistor (for example, a switch transistor *Q*₅₂), the rectifier unit 213b further includes a third switch transistor *Q*₅₃ and a fourth switch transistor *Q*₅₄.

The transformer 212b includes leakage inductances (such as a secondary-side leakage inductance *L*ᵣ₅₁ and a primary-side leakage inductance *L*_{*r*51}*'*), distributed capacitors (such as a secondary-side distributed capacitor *C*_{*r*51} and a primary-side distributed capacitor *C*ᵣ₅₁'), and an ideal transformer *T*₅₁. It should be noted that the secondary-side leakage inductance *L*ᵣ₅₁, the primary-side leakage inductance *L*_{*r*51}*'*, the secondary-side distributed capacitor *C*_{*r*51}, the primary-side distributed capacitor *C*_{*r*51}*'*, and the ideal transformer *T*₅₁ are specifically embodied as one actual transformer.

One end of a secondary side of the transformer 212b (namely, one end of a secondary side of the ideal transformer *T*₅₁) is coupled to a first end (namely, a drain electrode) of the switch transistor *Q*₅₁ and a second end (namely, a source electrode) of the third switch transistor *Q*₅₃ through the secondary-side leakage inductance *L*ᵣ₅₁ and the secondary-side distributed capacitor *C*_{*r*51}*.* The other end of the secondary side of the transformer 212b (namely, the other end of the secondary side of the ideal transformer *T*₅₁) is coupled to a first end (namely, a drain electrode) of the switch transistor *Q*₅₂ and a second end (namely, a source electrode) of the fourth switch transistor *Q*₅₄. Third ends (namely, gate electrodes) of the switch transistors (such as the switch transistors *Q*₅₁, *Q*₅₂, *Q*₅₃, and *Q*₅₄) are all coupled to different output ports in a controller.

During specific implementation, the controller may control both the switch transistor *Q*₅₁ and the switch transistor *Q*₅₂ to be turned on, so that the secondary side of the transformer 212b is short-circuited. Alternatively, the controller may control both the third switch transistor *Q*₅₃ and the fourth switch transistor *Q*₅₄ to be turned on, so that the secondary side of the transformer 212b may be short-circuited.

For example, the chopper unit 211b is also a full-bridge circuit. A structure of the chopper unit 211b shown in FIG. 5 is the same as that of the chopper unit 211a described with reference to FIG. 3. For details, refer to the foregoing embodiment of the chopper unit 211a described with reference to FIG. 3. Details are not described herein again.

When determining to discharge a bus capacitor *C*₅₁, the controller may send the first control signal and the second control signal to the chopper unit 211b according to the first preset frequency. In this case, an obtained equivalent circuit is still as shown in FIG. 4, and a formed closed discharge loop still includes equivalent conductive impedance of a secondary-side loop of the ideal transformer *T*₅₁.

It can be learned from FIG. 3 and FIG. 5 that a structure of the rectifier unit 213b coupled to the secondary side of the transformer 212b in this embodiment of this application is different from a structure of the rectifier unit 213a coupled to the secondary side of the transformer 212a shown in FIG. 3.

In some feasible implementations, a load connected to the DC/DC converter 21b in this embodiment of this application is a power factor correction (Power Factor Correction, PFC) circuit. The DC/DC converter 21b is disposed between the PFC circuit and a power battery. The bus capacitor *C*₅₁ is disposed between the power battery and the DC/DC converter 21b, that is, the power battery is coupled to the bus capacitor *C*₅₁ and the chopper unit 211b. The PFC circuit is in a non-working state when the secondary side of the transformer 212b is short-circuited, that is, all switch transistors in the PFC circuit are in an off-state.

For example, an input end of the PFC circuit is an alternating current grid. A three-phase voltage and a three-phase current of the alternating current grid are separately output to the DC/DC converter 21b through the PFC circuit. The PFC circuit may adjust a phase difference between the three-phase voltage and the three-phase current. For specific implementation, refer to the conventional technology. Details are not described herein.

It may be understood that, when discharging of the bus capacitor *C*₅₁ stops, the three-phase voltage and the three-phase current that are output by the alternating current grid are transmitted to the DC/DC converter 21b through the PFC circuit, that is, are sequentially transmitted to the rectifier unit 213b, the transformer 212b, and the chopper unit 211b, and then arrive at the bus capacitor *C*₅₁ and the power battery. However, when active discharging of the bus capacitor *C*₅₁ is performed, a switch *S*₅₁ connected in series between the bus capacitor *C*₅₁ and the power battery is turned off, so that voltage backflow of the power battery is avoided. In this case, a voltage at two ends of the bus capacitor *C*₅₁ sequentially passes through conductive impedance of the chopper unit 211b, conductive impedance of a primary side of the transformer 212b, and the equivalent conductive impedance of the secondary-side loop of the 212b.

For example, the DC/DC converter 21b shown in FIG. 5 is applicable to an on-board charger (On-board Charger, OBC) on the electric vehicle.

In this embodiment of this application, the switch transistors included in the rectifier unit are also controlled through addition, and the secondary side of the transformer is short-circuited, so that the equivalent conductive impedance of the secondary side of the transformer is added to the discharge loop of the bus capacitor. Different from the DC/DC converter shown in FIG. 3, the bus capacitor discharging method in this embodiment of this application is applicable to different structures of the DC/DC converter, for example, may share a power supply loop of the power battery. When active discharging of the bus capacitor is performed, the PFC circuit does not work, and the power supply loop of the power battery is used to discharge the bus capacitor. This ensures high applicability.

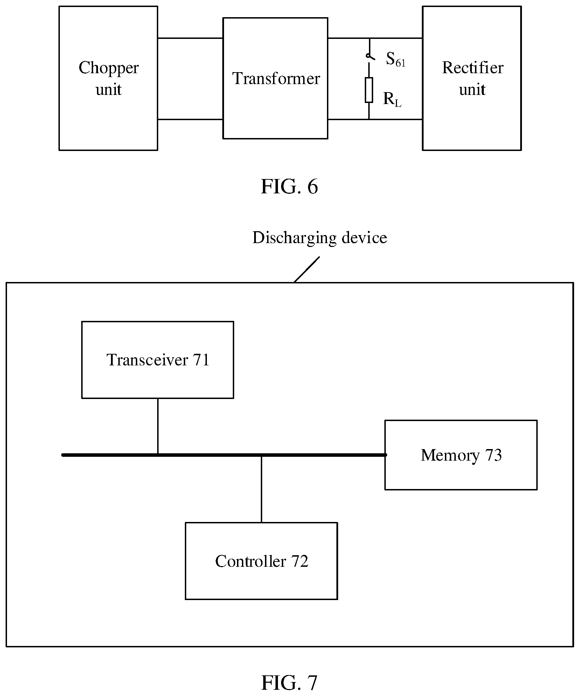

Optionally, in some feasible implementations, the bus capacitor discharging method provided in this embodiment of this application is applicable to a DC/DC converter shown in FIG. 6. The DC/DC converter includes a chopper unit, a transformer, a rectifier unit, a first switch *S*₆₁, and a first resistor *R_{L}*. Two ends of the first switch *S*₆₁ and the first resistor *R_{L}* that are connected in series are connected in parallel between two ends of the transformer. In FIG. 6, an example in which the two ends of the first switch *S*₆₁ and the first resistor *R_{L}* that are connected in series are connected in parallel between two ends of a secondary side of the transformer is used. It may be understood that the two ends of the first switch *S*₆₁ and the first resistor *R_{L}* that are connected in series may alternatively be connected in parallel between two ends of a primary side of the transformer.

When determining to discharge a bus capacitor, a controller controls the rectifier unit to short-circuit the secondary side of the transformer, controls the chopper unit to close a loop formed between the bus capacitor and the primary side of the transformer, and controls the first switch *S*₆₁ to be turned on. In this case, the bus capacitor may form a closed discharge loop through conductive impedance of the chopper unit, conductive impedance of the primary side of the transformer, and equivalent conductive impedance of the secondary-side loop of the transformer. The equivalent impedance of the secondary-side loop of the transformer increases the first resistor *R_{L}* because the first switch *S*₆₁ is turned on. In other words, in this embodiment of this application, impedance of the formed closed discharge loop increases, so that a discharge speed of the bus capacitor can be accelerated.

It may be understood that, although a switch and a resistor are added in this embodiment of this application, compared with the conventional technology, because the rectifier unit is controlled to short-circuit the secondary side of the transformer, the added resistor may be induced to the primary side of the transformer, and the impedance of the discharge loop of the bus capacitor is added, so that the discharge speed of the bus capacitor can be further improved.

FIG. 7 is a schematic structural diagram of a bus capacitor discharging device according to an embodiment of this application. As shown in FIG. 7, a DC/DC converter includes a transceiver 71, a controller 72, and a memory 73. The transceiver 71, the controller 72, and the memory 73 are connected by using a bus system. The transceiver 71 may receive and send instructions. The memory 73 may store the instructions. The controller 72 may invoke the instructions stored in the memory 73, to perform any one of the possible embodiments described with reference to FIG. 1 to FIG. 6. For a specific implementation principle and a technical effect thereof, refer to the descriptions of the foregoing embodiments. Details are not described herein again.

It may be understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache.

It should be noted that when the controller 72 is a general-purpose processor, a DSP, an ASIC, an FPGA or another programmable logic device, a discrete gate or transistor logic device, or a discrete hardware component, the memory 73 (storage module) is integrated into the controller 72.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A bus capacitor discharging method, wherein the discharging method is applicable to a DC/DC converter, and the DC/DC converter comprises a chopper unit, a transformer, and a rectifier unit, wherein a bus capacitor is coupled to the chopper unit, the chopper unit is coupled to a primary side of the transformer, a secondary side of the transformer is coupled to the rectifier unit, and the chopper unit and the rectifier unit are both coupled to a controller; and
the discharging method comprises:
when determining to discharge the bus capacitor, controlling, by the controller, the rectifier unit to short-circuit the secondary side of the transformer, and controlling the chopper unit to close a loop formed between the bus capacitor and the primary side of the transformer.

2. The discharging method according to claim 1, wherein the discharging method further comprises:
when determining to stop discharging the bus capacitor, controlling, by the controller, the rectifier unit to rectify a voltage on the secondary side of the transformer.

3. The discharging method according to claim 1 or 2, wherein the rectifier unit comprises a first switch transistor and a second switch transistor;
that a secondary side of the transformer is coupled to the rectifier unit specifically comprises:
one end of the secondary side of the transformer is coupled to a first end of the first switch transistor, the other end of the secondary side of the transformer is coupled to a first end of the second switch transistor, a second end of the first switch transistor is coupled to a second end of the second switch transistor, and a third end of the first switch transistor and a third end of the second switch transistor are both coupled to the controller; and
the controlling the rectifier unit to short-circuit the secondary side of the transformer specifically comprises:
controlling, by the controller, both the first switch transistor and the second switch transistor to be turned on.

4. The discharging method according to claim 3, wherein the secondary side of the transformer comprises a first end, a second end, and a third end;
that one end of the secondary side of the transformer is coupled to a first end of the first switch transistor, and the other end of the secondary side of the transformer is coupled to a first end of the second switch transistor specifically comprises:
the first end of the secondary side of the transformer is coupled to the first end of the first switch transistor, and the second end of the secondary side of the transformer is coupled to the first end of the second switch transistor; and
the second end of the first switch transistor and the second end of the second switch transistor are coupled to one end of a load, and the other end of the load is coupled to the third end of the secondary side of the transformer.

5. The discharging method according to claim 4, wherein the load comprises a battery, the DC/DC converter is disposed between the battery and a power battery, and the power battery is coupled to the bus capacitor and the chopper unit.

6. The discharging method according to claim 5, wherein the DC/DC converter further comprises an isolation switch, the isolation switch is coupled to the controller, and the third end of the secondary side of the transformer is coupled to the battery through the isolation switch; and
the discharging method further comprises:
when determining to discharge the bus capacitor, controlling, by the controller, the isolation switch to be turned off.

7. The discharging method according to claim 3, wherein the rectifier unit further comprises a third switch transistor and a fourth switch transistor;
that a secondary side of the transformer is coupled to the rectifier unit specifically further comprises:
one end of the secondary side of the transformer is further coupled to a second end of the third switch transistor, a second end of the secondary side of the transformer is further coupled to a second end of the fourth switch transistor, a first end of the third switch transistor and a first end of the fourth switch transistor are coupled to one end of a load, and the other end of the load is coupled to the second end of the first switch transistor and the second end of the second switch transistor; and
the controlling the rectifier unit to short-circuit the secondary side of the transformer specifically comprises:
controlling, by the controller, both the first switch transistor and the second switch transistor to be turned on, or controlling, by the controller, both the third switch transistor and the fourth switch transistor to be turned on.

8. The discharging method according to claim 7, wherein the load comprises a power factor correction circuit, the DC/DC converter is disposed between the power factor correction circuit and a power battery, the power battery is coupled to the bus capacitor and the chopper unit, the power factor correction circuit is coupled to the secondary side of the transformer through the rectifier unit, and the power factor correction circuit is in a non-working state when the secondary side of the transformer is short-circuited.

9. The discharging method according to any one of claims 1 to 8, wherein the controlling the chopper unit to close a loop formed between the bus capacitor and the primary side of the transformer specifically comprises:
alternately sending, by the controller, a first control signal and a second control signal to the chopper unit according to a first preset frequency, wherein
the chopper unit comprises a first bridge arm and a second bridge arm that are connected in parallel, and each bridge arm comprises two switch transistors connected in series; and
the first control signal is used to: control a first switch transistor in the first bridge arm and a second switch transistor in the second bridge arm to be turned on, and control a second switch transistor in the first bridge arm and a first switch transistor in the second bridge arm to be turned off; and the second control signal is used to: control the first switch transistor in the first bridge arm and the second switch transistor in the second bridge arm to be turned off, and control the second switch transistor in the first bridge arm and the first switch transistor in the second bridge arm to be turned on.

10. The discharging method according to claim 9, wherein the discharging method further comprises:
when determining to stop discharging the bus capacitor, alternately sending, by the controller, the first control signal and the second control signal to the chopper unit according to a second preset frequency.

11. The discharging method according to claim 1 or 2, wherein the DC/DC converter further comprises a first switch and a first resistor, and two ends of the first switch and the first resistor that are connected in series are coupled in parallel between two ends of the transformer; and
the controlling the rectifier unit to short-circuit the secondary side of the transformer specifically comprises:
controlling, by the controller, the first switch to be turned on.

12. A bus capacitor discharging device, wherein the discharging device comprises a transceiver, a controller, and a memory, the transceiver, the controller, and the memory are connected by using a bus system, the transceiver is configured to receive and send instructions, and the memory is configured to store the instructions; and
the controller is configured to invoke the instructions stored in the memory, to perform the method according to any one of claims 1 to 11.

13. An electric vehicle, wherein the electric vehicle comprises the discharging device according to claim 12 and a power battery, and the discharging device is configured to: output a voltage to the power battery, or convert a voltage output by the power battery and then provide a converted voltage to a load in the electric vehicle.
